# EUROPEAN PATENT APPLICATION

(11) **EP 4 644 977 A1**
(43) Date of publication of application: **05.11.2025**
(21) Application number: 25172106.4
(22) Date of filing: 24.04.2025
(51) Int. Cl.: G02F 1/035, G02B 6/136, G02F 1/21, G02F 1/225

(54) **INTEGRATED ELECTRO-OPTICAL MODULATOR**

(30) Priority: 24.04.2024 US 202463638372 P; 23.04.2025 US 202519187910
(71) Applicant: Cisco Technology, Inc., San Jose, CA 95134-1706 (US)
(72) Inventor: Chen, Long, San Jose, 95134-1706 (US); Heanue, John, San Jose, 95134-1706 (US); Chen, Jiayang, San Jose, 95134-1706 (US); Chen, Li, San Jose, 95134-1706 (US); Xu, Qianfan, San Jose, 95134-1706 (US)
(74) Representative: Noble, Nicholas

(57) **Abstract**

In part, the disclosure relates to an electro-optical device that includes a first substrate; a first dielectric layer above the first substrate; a first and second electrode embedded in the first dielectric layer; a dielectric waveguide above the first dielectric layer; a second dielectric layer above the first dielectric layer and the dielectric waveguide, the second dielectric layer defines a cavity above the dielectric waveguide; and a die. The die may include a second substrate, a middle layer, and an electro-optical layer. The middle layer may be sandwiched between the electro-optical layer and the second substrate. The die has a shape defined by a length, a width, and a height. The dielectric waveguide and the electro-optical layer may define or comprise a hybrid electro-optical waveguide, the first electrode and the second electrode are used to change the optical phase of the hybrid optical waveguide in response to signal(s).

## Description

### CROSS-REFERENCE TO RELATED APPLICATIONS

This application claims benefit of co-pending United States provisional patent application Serial No. 63/638,372 filed April 24, 2024.

### TECHNICAL FIELD

This disclosure relates generally to the fields of integrated photonics, silicon photonics, and photonic integrated circuits.

### BACKGROUND

Optical telecommunications systems and photonic integrated circuits (PICs) make extensive use of various manufacturing processes for electro-optical modulators, and various chip assembly methods.

### BRIEF DESCRIPTION OF THE DRAWINGS

Unless specified otherwise, the accompanying drawings illustrate aspects of the innovations described herein. Referring to the drawings, wherein like numerals refer to like parts throughout the several views and this specification, several embodiments of presently disclosed principles are illustrated by way of example, and not by way of limitation. The drawings are not intended to be to scale. A more complete understanding of the disclosure may be realized by reference to the accompanying drawings in which:
Figure 1 is a schematic diagram showing a cross section of a photonic integrated circuit (PIC) and a multi-layer die being inserted into a cavity of the PIC according to an exemplary embodiment of the disclosure.
Figure 1A is a schematic diagram showing a cross section of the photonic integrated circuit (PIC) and a multi-layer die of Figure 1 with additional regions and components in layers of the PIC according to an exemplary embodiment of the disclosure.
Figure 1B is a schematic diagram showing a cross section of the photonic integrated circuit (PIC) and a multi-layer die of Figure 1A with the multi-layer die bonded in the cavity according to an exemplary embodiment of the disclosure.
Figure 1C is a cross section of a PIC and a die bonded into an oxide cavity of the PIC, wherein an adhesive layer surrounds the interior of the cavity according to an exemplary embodiment of the disclosure.
Figure 2 is a heatmap of a waveguide mode in a cross section of a PIC and a die bonded into an oxide cavity of the PIC according to an exemplary embodiment of the disclosure.
Figure 3A is a cross section of a PIC and an oxide cavity, that includes a silicon waveguide and a silicon slab above the waveguide acting as an etch stop according to an exemplary embodiment of the disclosure.
Figure 3B is a cross section of a PIC and an oxide cavity, that includes a silicon waveguide and a silicon nitride (SiN) layer above the waveguide acting as an etch stop according to an exemplary embodiment of the disclosure.
Figure 3C is a cross section of a PIC and an oxide cavity, that includes a silicon waveguide and a thin layer of un-etched oxide above the waveguide according to an exemplary embodiment of the disclosure.

### DESCRIPTION OF EXAMPLE EMBODIMENTS

### OVERVIEW

In part, in one aspect, the disclosure relates to an electro-optical device that includes a first substrate; a first dielectric layer above the first substrate; a first and second electrode embedded in the first dielectric layer; a dielectric waveguide above the first dielectric layer; a second dielectric layer above the first dielectric layer and the dielectric waveguide, wherein the second dielectric layer defines a cavity above the dielectric waveguide; and a die. The die may include a second substrate, a middle layer, and an electro-optical layer. The middle layer may be sandwiched between the electro-optical layer and the second substrate. The die has a shape. The shape is defined by a length, a width, and a height, wherein the die is disposed in the cavity. The dielectric waveguide and the electro-optical layer may define or comprise a hybrid electro-optical waveguide, wherein the first electrode and the second electrode are used to the change the optical phase of the hybrid optical waveguide in response to one or more electrical signals.

In one aspect, a method of fabricating an electro-optical device is described. The method includes providing die comprising a second substrate, a middle layer, and an electro-optical layer where the middle layer is sandwiched between the electro-optical layer and the substrate and where the die has a shape, and where the shape is defined by a length, a width, and a height. The method also includes providing a photonic wafer comprising a photonic integrated circuit where the wafer further includes a first substrate, a dielectric waveguide, a first dielectric layer, and where the first dielectric layer is sandwiched between the dielectric waveguide and the first substrate, and metal electrodes embedded in the first dielectric layer, a second dielectric layer above the dielectric waveguide. The method also includes etching the second dielectric layer of the wafer to define a cavity, wherein the cavity is sized to receive the die and securing the die in the cavity. Moreover, the dielectric waveguide, the electro-optical layer, and the first and second electrodes form an electro-optical hybrid waveguide.

### EXAMPLE EMBODIMENTS

In part, in one aspect, the disclosure relates to a method of integrating a layer of electrooptical material such as lithium niobate (LiNbO₃) or barium titanate (BTO) into a silicon photonics platform or a photonic integrated circuit (PIC). In embodiments described hereafter, the electrooptical material is LiNbO₃, though other materials such as BTO may be used instead of LiNbO₃. In one aspect, lithium niobate may be incompatible with a conventional silicon process or incompatible with processes that are offered by a foundry providing standard CMOS processes. In some embodiments, integrating a lithium niobate layer with an integrated silicon photonics platform may generally include bonding of a wafer or a die containing lithium niobate to the integrated silicon photonics platform, and a removal of a substrate of the bonded wafer or die. In part, the disclosure relates to a method of integrating a prefabricated and machined lithium niobate die into a cavity etched in a photonic integrated circuit (PIC), wherein the machined die includes a lithium niobate layer that is bonded near, on, or in close proximity to a silicon waveguide in the PIC.

In part, in another aspect, the disclosure relates to an integrated, hybrid electro-optical modulator. In one aspect, the electro-optical modulator substantially includes integrated silicon and lithium niobate waveguides, and further includes various metal layers, electrodes, vias, and other components or features deposited into a PIC. In some embodiments, the electro-optical layer is patterned or a uniform film across the die.

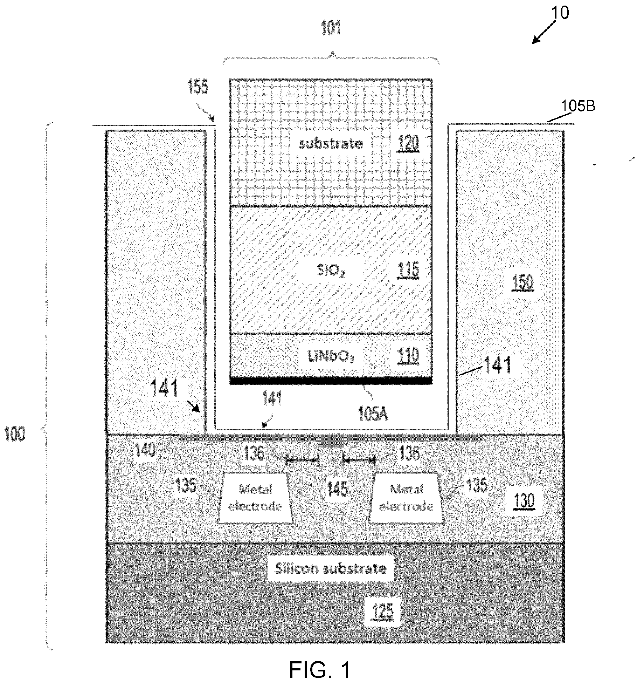

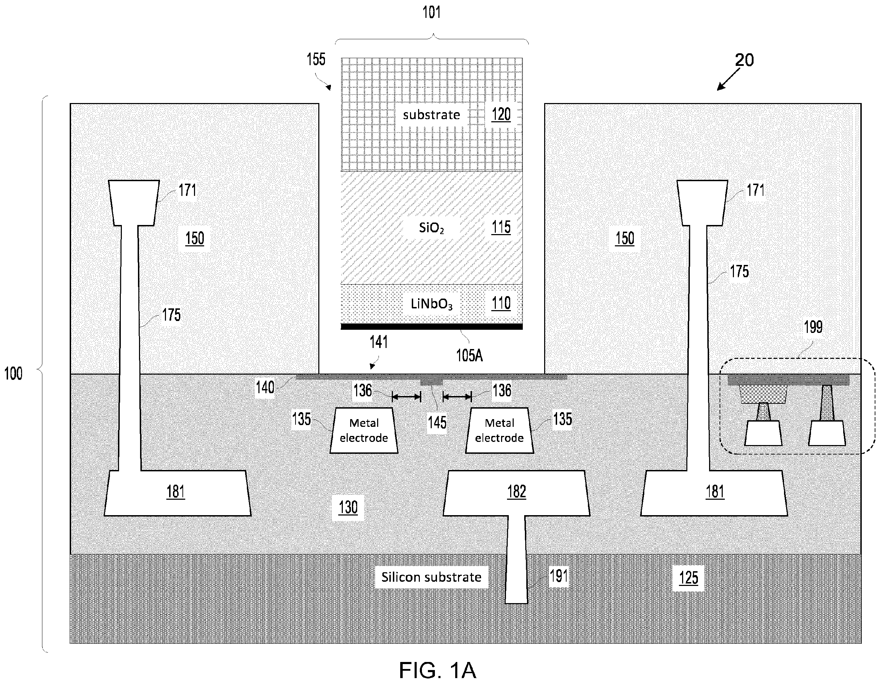

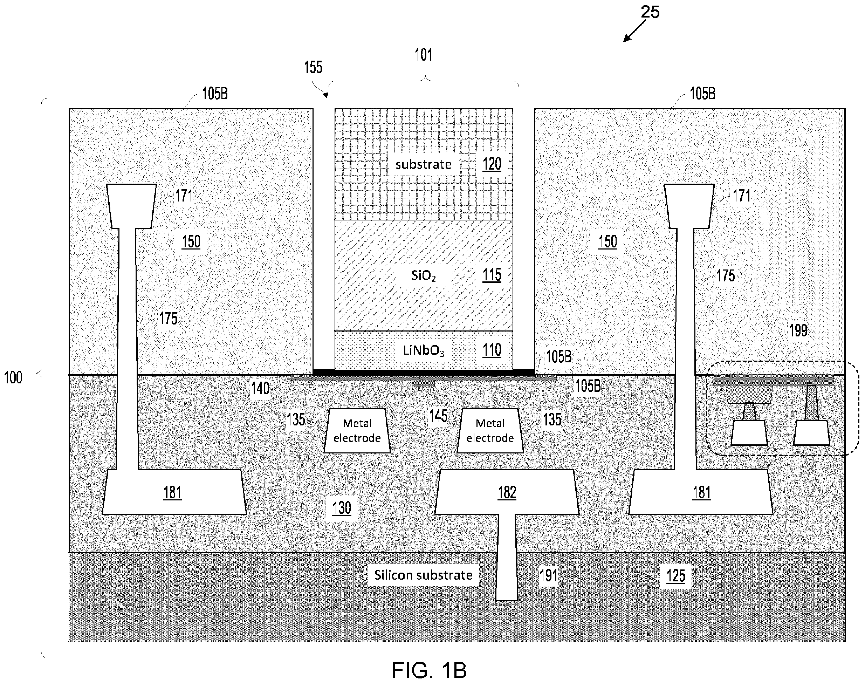

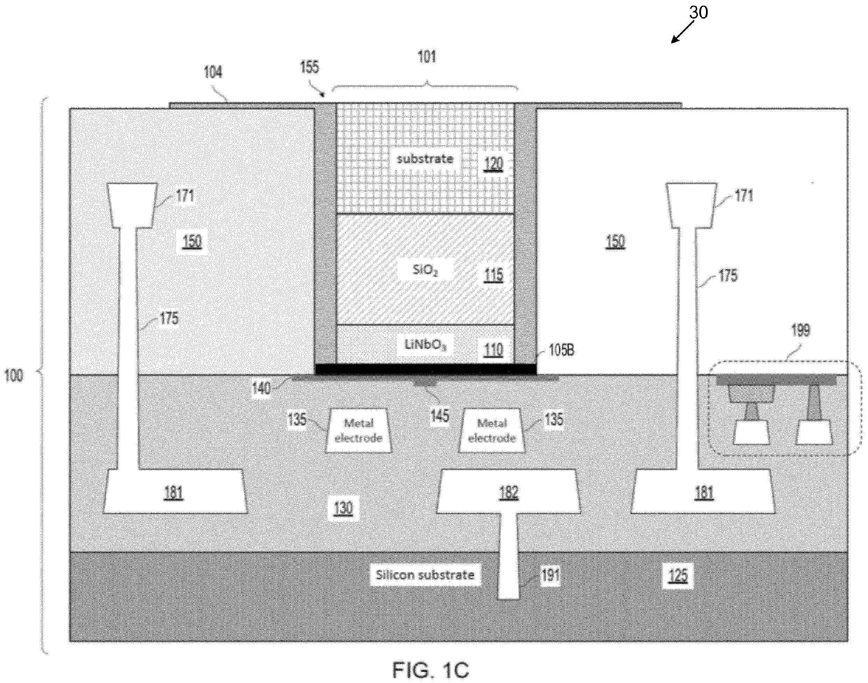

Refer now to the exemplary embodiment of Figure 1, which in part shows a schematic diagram of electro-optical device 10 being manufactured. Figure 1 depicts a photonic integrated circuit 100 that includes a silicon substrate 125 that has a first dielectric layer 130 disposed thereon. A second dielectric layer 150 is disposed on the first dielectric layer 130 in various embodiments. The first dielectric layer 130 and the second dielectric layer 150 comprise materials such as silicon dioxide (SiO2), silicon nitride (Si3N4), silicon oxynitride (SiON), or other oxide or dielectric materials. Each layer disclosed herein may include one or more layers in various embodiments. In some embodiments, the electro-optical device may include a waveguide-integrated photodiode, the photodiode in optical communication with the dielectric waveguide.

In many embodiments, the dielectric layer 150 is etched to introduce a cavity 155, forming exposed surfaces 141. A dielectric waveguide 145 (e.g., a core of a waveguide) is embedded in the dielectric layer 130 and is in close proximity to a bottom surface 141 of the cavity 155. Such dielectric waveguide can comprise of silicon nitride (Si₃N₄), silicon, or other materials with appropriate index of refraction. The dielectric waveguide 145 can be a fully etched channel waveguide, or a partially etched waveguide with a slab extending away from the waveguide ridge, as shown as slab region 140 in Figure 1. In some embodiments, the top surface of the slab region 140 is part of the exposed surfaces 141 of cavity 155. In some embodiments, the dielectric waveguide may include silicon.

In some embodiments, the slab region 140 and the waveguide 145 can comprise of different material. For example, the waveguide 145 can be silicon and the slab region 140 can be SiO₂ or Si₃N₄. Alternatively, in some embodiments, the waveguide 145 can be Si₃N₄ and the slab region 140 can be SiO₂. In most embodiments, a prefabricated lithium niobate on insulator (LNOI) wafer is machined or otherwise processed to produce a die 101. The die 101 is of a shape such that the die fits into the cavity 155. The shape of the die is approximately rectangular in shape in most embodiments, but other shapes and variations in shape as typical in semiconductor and PIC processing are also possible.

As shown in Figure 1, one or more dielectric layers 105B may be deposited on cavity 155 to cover portions of surfaces 141. In some embodiments, the one or more dielectric layers 105B may only cover the bottom surface of the cavity 155 as shown in Figure 1B. In some embodiments, the one or more dielectric layers 105B may only cover the bottom surface and the sidewall surfaces of the cavity 155, but not the top surface outside the cavity area. In various embodiments, the one or more dielectric layers 105B may include SiO₂, Si₃N₄, Al₂O₃, Benzocyclobutene (BCB), polyimide, or other dielectric materials. The one or more dielectric layers 105B may serve one or more purposes: to protect the cavity 155, particularly the bottom surface of the cavity 155, to assist with the optical transition near the cavity region, or to assist with the bonding.

In some embodiments, the one or more dielectric layers 105B may be around 100 nm or less. In some embodiments, the die further includes one or more dielectric layers, wherein the one or more dielectric layers are disposed on the electro-optical layer of the die, wherein the one or more dielectric layers have a thickness less than or equal to about 100 nm. In some embodiments, one or more dielectric layers are disposed at the bottom surface of cavity above the dielectric waveguide, wherein the one or more dielectric layers have a thickness less than or equal to about 100 nm.

In most embodiments, the lithium niobate wafer and the machined die comprises various layers, such as a substrate 120, a middle layer 115 such as a silicon oxide layer, and an electro-optical layer that may include lithium niobate (LiNbO3) layer 110. In various embodiments, the middle layer is an oxide layer. In many embodiments, the machined die 101 is operable to be inserted and bonded into the cavity 155. In some embodiments, the bonding can be done at room temperature or elevated temperatures. In some embodiments, the bonding can be done at vacuum, controlled atmosphere such as in nitrogen environment, or in air environment. In some embodiments, the bonding might include applying certain amount of force to press the machined die 101 into the cavity 155 for certain duration, for example, from 0.1 seconds to 100 seconds. In some embodiments, a bonding of the die 101 into the cavity 155 may include an annealing step. The annealing can be done in temperatures ranging from about 100°C to about 400°C and can include various ramping and holding profiles in temperature control. The annealing can be done in vacuum, controlled atmosphere such as in nitrogen environment, or in air environment. In some embodiments, the electro-optical layer includes barium titanate. In some embodiments, the dielectric waveguide and the electro-optical layer are electrically coupled, wherein the electrical coupling is controlled in response to a width of the dielectric waveguide.

In various embodiments, to facilitate a bonding of the die 101 into the cavity 155, the lithium niobate layer 110 of the die 101 is coated with one or more dielectric layers 105A. In various embodiments, the one or more dielectric layers 105A may include SiO₂, Si₃N₄, Al₂O₃, BCB, polyimide, or other dielectric layers. In some embodiments, the one or more dielectric layers 105A may be around 100 nm or less. The one or more dielectric layers 105A and one or more dielectric layers 105B depend on the design and integration process. In other embodiments or processing stages, such as shown in Figures 1A, 1B and 1C either one or both may be absent or added as applicable for a given design or embodiment.

In various embodiments, electro-optical device 10 further includes dielectric or adhesive layer 104 that is disposed in one or more regions between side surfaces of the die and walls of the cavity after the bonding. Various dielectric or adhesive configurations may be used to secure the die in the cavity. In some embodiments, the adhesive is an epoxy or other optical adhesive that has a desirable index of refraction, for example, a value close to the dielectric 150. In some embodiment, it can be a spin-on-glass. In various embodiments, after bonding, the substrate 120 of the machined die 101 may be partially or fully removed. For example, prior to bonding, the thickness of the substrate 120 may be between about 100 um and about 1 about 800 um. After bonding, the thickness of the substrate 120 may be reduced to about 0 to about 20 um. This can be achieved using a variety of methods, including mechanical grinding, chemical etching, and plasma etching. The application of dielectric or adhesive layer 104 can be done before or after the substrate reduction or removal. After the substrate reduction or removal, the device 10 may be coated with other dielectric material if desired.

In at least one embodiment, the die 101, having been bonded into the cavity 155, may form a portion of an electro-optical modulator. In many embodiments, the dielectric waveguide 145, the dielectric slab region 140, in some embodiments both of which can be made of silicon, the lithium niobate layer 110, and optionally the dielectric layers 105A deposited on the lithium niobate layer 110 and the dielectric layers 105B deposit on the cavity, together form a hybrid electro-optical waveguide. The distribution of the optical mode depends on the refractive indices and thicknesses of various layers, and importantly, by the width of the dielectric waveguide 145. For example, in the embodiments of silicon dielectric waveguide 145 and silicon slab region 140, the width of the dielectric waveguide 145 can be between about 100 nm and about 1000 nm. In some embodiments, the hybrid electro-optical waveguide is part of the arms of a Mach-Zehnder interferometer. In some embodiments, the one or more dielectric layers include Benzocyclobutene (BCB).

In some embodiments, the thickness of the dielectric waveguide core region 145 can be between about 100 nm and about 300 nm. The thickness of the silicon slab region 140 can be between about 10 nm and about 50 nm. The thickness of the dielectric layers 105A and 105B can be both between 30 nm and 100 nm. The thickness of the lithium niobate layer can be between about 200 nm and about 800 nm. With proper design, the optical mode distribution can be engineered to be mostly confined in the silicon waveguide 145 when the waveguide width is relatively wide (>350 nm) and mostly confined in the lithium niobate layer when the waveguide width is relatively narrow (<250 nm).

In various embodiments the die 101 is a lithium niobate die 101 such a machined or processed lithium niobate die 101. In some embodiments, the lithium niobate layer 110 of the machined die 101 is un-patterned and continuous across the entire die surface. In some embodiments, the lithium niobate layer 110 of the machined die 101 is patterned and present only in proximity of the dielectric waveguide 145, for example, in lateral distance of about 10 um to each side. In either case, the distribution of the optical mode field is largely independent of the width of the lithium niobate layer 110, or the fine placement accuracy of the lithium niobate die 101 into the cavity. A placement accuracy of 3~5 um will be sufficient provided that the width of the lithium niobate layer is 20 um wide or more.

In several embodiments, a first oxide layer 130 underlying the cavity 155 may further include metal electrodes 135 near the dielectric waveguide 145. In most embodiments, the metal electrodes 135 are in proximity to the dielectric waveguide 145, having a lateral distance 136 from the waveguide of about 5 µm or less. The metal electrodes 135 may have a thickness between about 0.5 um and about 3 um and a width between about 2 um and about 50 um. The metal electrodes 135 might be in contact with the slab region 140, or above slab region 140 with a distance between about 0 and about 2 um. In most embodiments, the metal electrodes 135 drive a hybrid optical waveguide described above. The electrical signals on the electrodes 135 can generate electric field in the lithium niobate layer 110 and induce a change in its refractive index, and correspondingly the phase of an optical signal propagating along the waveguide. Such waveguide can be part of a Mach-Zehnder Interferometer (MZI) where either one or both arms can include a hybrid waveguide integrated with driving electrodes. In some embodiments, there are multiple copies of hybrid electro-optical waveguides underneath the die.

In some embodiments, a stronger electric field in the lithium niobate layer 110 induces larger phase change in the hybrid waveguide and thus stronger electro-optical modulation. For a given voltage signal, the electric field strength depends on a whole range of design parameters, including the distance between the two electrodes, the distance of electrodes to the waveguide 145 both laterally and vertically, and the various thicknesses of the hybrid optical waveguide. However, if the metal electrodes 135 are placed too close to the hybrid optical waveguide, it will also introduce notable optical absorption loss. In addition, the attenuation of the driving electrical or radio-frequency (RF) signal, the propagation speed of the RF signal and its matching with the propagation speed of the optical signal depend on the various design parameters and affect the modulation bandwidth of the device. Therefore, one familiar with the art of integrated electro-optical modulator designs would appreciate the tradeoff among optical loss, modulation efficiency, and modulation bandwidth, and therefore the complexity of optimization of various design parameters of such modulators shown in Figure 1.

Figure 1A shows a schematic diagram of electro-optical device 20 being manufactured with the insertion of a die 101 in cavity 155 in accordance with Figure 1. Figure 1A shows the device 10 that is being manufactured with various additional components. In various embodiments, the PIC 100 further includes a waveguide-integrated germanium photodiode 199 placed on and below a silicon waveguide layer, which includes the slab portion 140 and the ridge waveguide portion of the waveguide 145 of the hybrid optical waveguide described above. The waveguide-integrated germanium photodiode 199 may be used as a monitoring device for controlling of the MZI electro-optical modulator from the hybrid optical waveguide.

For example, such photodiode 199 may be placed after one or both outputs of the MZI modulator to ensure the MZI is set to a desired operating point. For example, for intensity modulation, the MZI is set at the quadrature point where the optical output power is 50% of full transmission; for coherent transmission, the child MZI is set at the minimum transmission point. In many embodiments, MZI would include a low-frequency optical phase shifter using thermos-optical or electro-optical or other effects to adjust the operating point. The waveguide-integrated germanium photodiode 199 can be used to facilitate such controls. In some other embodiments, the waveguide-integrated germanium photodiode 199 can be part of a receiver circuit for the detecting incoming modulated signal, in parallel with the transmitter using the electro-optical modulator described above. In various embodiments, the electro-optical device may include photonic integrated circuit, wherein the photonic integrated circuit includes the dielectric waveguide and a portion of the electro-optical layer is in optical communication with the dielectric waveguide.

In some embodiments the PIC 100 further includes at least one metal layer, depicted in Figure 1A as metal layers 171, placed above a silicon waveguide layer that includes the silicon slab region 140 and the silicon waveguide 145, and electrically connected or in electrical communication through one or more conductors 175 to at least one metal layer 181 below the silicon waveguide layer. Finally, in a few embodiments, the PIC 100 further includes a via 191 inside the silicon substrate 125 that is electrically connected to at least one metal layer 182 below a silicon waveguide layer that includes the silicon slab region 140 and the silicon waveguide 145. The metal layer 181 and metal layer 182 may be from the same layer, or two different layers that are electrically connected. The thickness of these metal layers 181, 182, and 171 can be between about 0.5 um and about 3 um. In some embodiments, the die 101 and other dies disclosed herein may have a shape having a length, a width and a height. In some embodiments, the length of the die ranges from about 500 um to about 3 cm, wherein the width of the die ranges from about 500 um to about 3 cm, wherein the height ranges from about 100 um to 700 um. In some embodiments, the shape of the die is an approximately rectangular solid.

In some embodiments, the via 191 inside the silicon substrate can become a through-silicon-via (TSV) when the substrate 125 is thinned down from the backside to reveal the via 191, which can be connected to additional metal layers deposited on the backside of the wafer after the TSV reveal process. The via 191 can be approximately 5 to 20 um in diameter and approximately 50 to 150 um in depth. The vertical spacings between various metal layers depend on process and can be between about 0.5 um to over about 10 um. The metal electrodes 135 for the electro-optical modulator can be electrically connected to metal layer 181 and therefore metal layer 171 for access from the top surface of the wafer. Alternatively, the metal electrodes 135 for the electro-optical modulator can be electrically connected to metal layer 182 and therefore metal via 191 for access from the bottom surface of the wafer after the TSV reveal and interconnect process. In various embodiments, the one or more conductors are vias or other conductive elements such as metals (copper, tungsten, aluminum and others) or doped semiconductors.

Refer now to the exemplary embodiment of Figure 1B. Figure 1B depicts the electro-optical device 20 that has the die 101 of Figure 1A bonded in the cavity 155. The device 20 is typically an electro-optical modulator. In various embodiments, the device 20 is an MZI modulator and include a first arm and a second arm. In some embodiments, both the first arm and the second arm are formed with two silicon waveguides underneath the same die 101. In some embodiments, there are multiple MZI modulators, each with two arms, each of which are placed underneath the same die 101. In various embodiments, various MZI modulators may be used such as 4, 8, 16, or another number of modulators. In some embodiments, after a bonding of the die 101 into the cavity 155, the substrate 120 of the die is partially removed. In other embodiments, after a bonding of the die 101 into the cavity 155, the substrate 120 of the die is fully removed. The die 101 is bonded or disposed on silicon slab region 140, or one or more dielectric layer 105B on top of the silicon slab region 140.

Refer now to the exemplary embodiment of Figure 1C. Figure 1C is an alternative embodiment of an electro-optical device 25 that includes a die 101 bonded into a cavity 155. In various embodiments, the gap between the die 101 and the sidewalls of the cavity 155 may be filled with dielectric material such as epoxy, spin-on-glass, etc. The substrate 120 can be partially removed in such a way that the surface of 101 is substantially flat with the surface of dielectric 150.

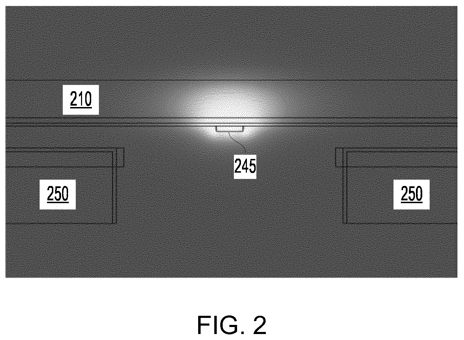

Refer now to the exemplary embodiment of Figure 2. Figure 2 is a map of a waveguide mode or electric field distribution in a cross section of a machine lithium niobate die that is disposed in a cavity of a PIC according to an exemplary embodiment of the disclosure. In the map, a silicon waveguide 245 guides light that is further carried in a lithium niobate waveguide 210. Metal electrodes 250 may electro-optically modulate the guided light. Metal electrodes 250 correspond to electrodes 135 in Figure 1B in some embodiments.

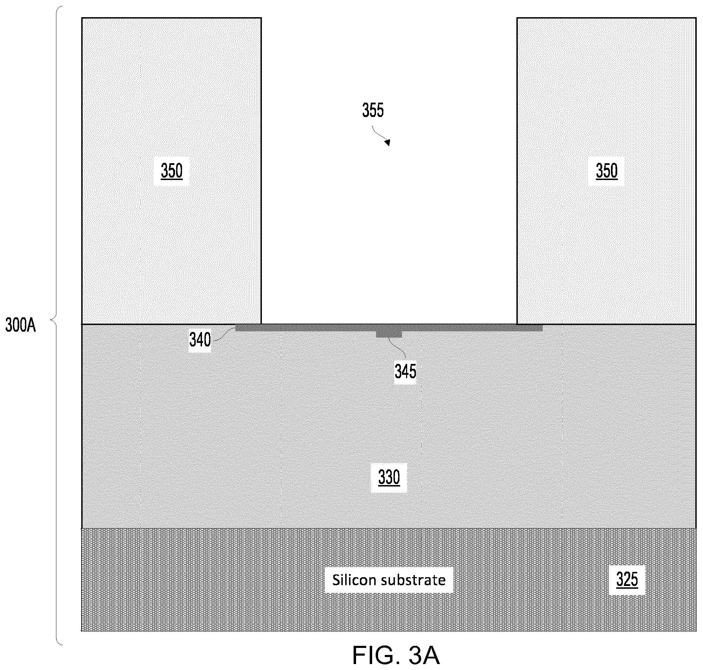

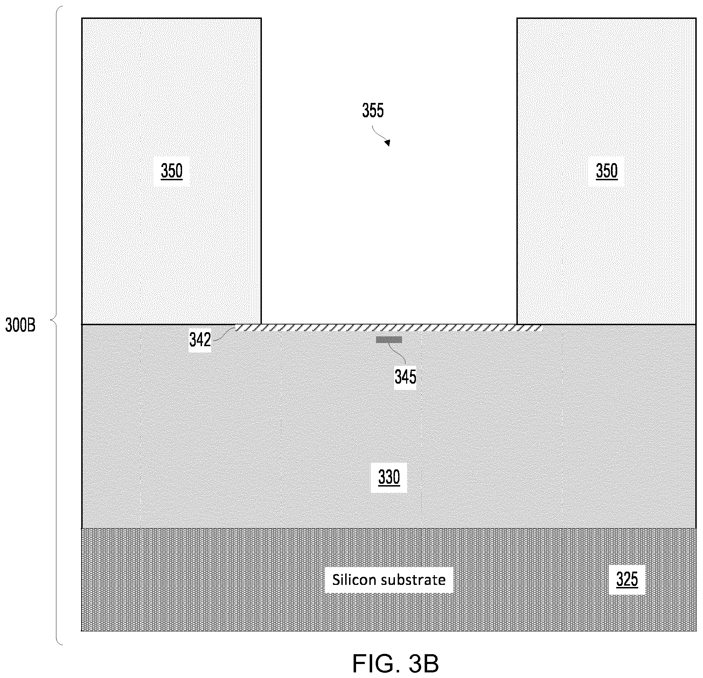

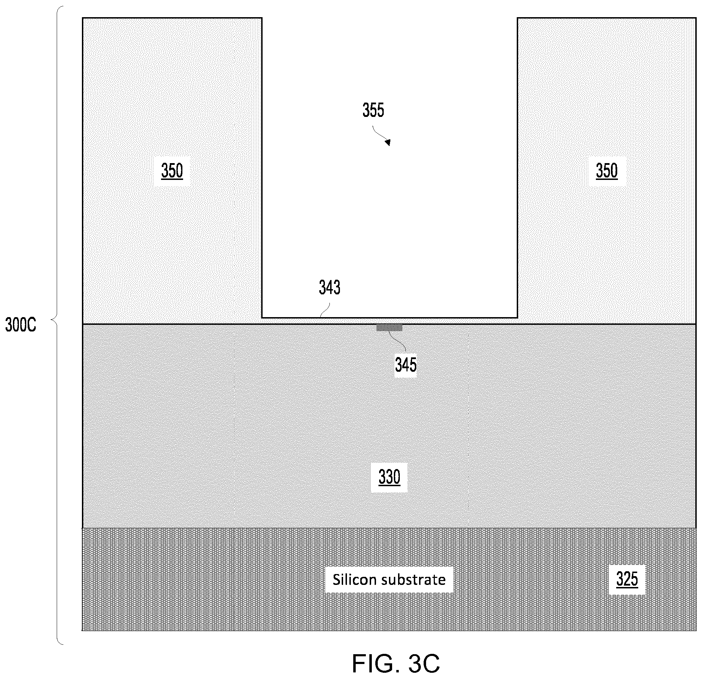

Refer now to the exemplary embodiments of Figures 3A, 3B, and 3C. These figures depict various embodiments of a PIC with a cavity and a dielectric waveguide, wherein the cavity is operable to have bonded into it a machined lithium niobate die as disclosed herein. An integrated, hybrid electro-optical modulator as disclosed herein may include, in part, the dielectric waveguide as depicted in Figures 3A, 3B, and 3C.

Refer now to Figure 3A, a cross section of a PIC 300A and a cavity 355, wherein the PIC 300A includes a dielectric waveguide 345 deposited near or upon an interface between a first dielectric layer 330 and a second dielectric layer 350. The first dielectric layer 330 is above a substrate 325. A thickness of the dielectric layer 330 may be in a range of about 2 µm to about 20 µm. A thickness of the second dielectric layer 350 may be in a range of about 2 µm to about 20 µm. Both the first dielectric layer 330 and the second dielectric layer 350 may comprise one or more materials such as SiO₂, Si₃N₄, SiON, or other materials. In the embodiment of Figure 3A and various other embodiments, a thin slab 340 may be deposited above the silicon waveguide 345 and function as an etch stop when etching is being performed relative to the wafer. In many embodiments, both the waveguide 345 and the thin slab 340 are silicon. In some embodiments, one or more additional metal layers are embedded in the first dielectric layer that are electrically connected to the first and second electrodes. In some embodiments, one or more metal layers are embedded in the second dielectric layer that are directly or indirectly electrically connected to the first and second electrodes. In some embodiments, a layer of metal vias is embedded in the first substrate and are directly or indirectly electrically connected to the first and second electrodes.

Refer now to Figure 3B, a cross section of a PIC 300B and a cavity 355, wherein the PIC 300B includes a dielectric waveguide 345 deposited near or upon an interface between a first dielectric layer 330 and a second dielectric layer 350. The first dielectric layer is above a substrate 325. **In** the embodiment of Figure 3B and various other embodiments, a separate, thin layer 342 may be deposited above the dielectric waveguide 345 and act as an etch stop. **In** many embodiments, the dielectric waveguide 345 is silicon or silicon nitride, and the thin layer 342 is silicon nitride.

Refer now to Figure 3C, a cross section of a PIC 300C and a cavity 355, wherein the PIC 300C includes a dielectric waveguide 345 deposited near or upon an interface between a first dielectric layer 330 and a second dielectric layer 350. The first dielectric layer 330 is above a substrate 325. **In** the embodiment of Figure 3C and various other embodiments, an etch that creates the cavity 355 may leave a thin layer 343 of the second dielectric layer 350 above the dielectric waveguide 345 such that the waveguide is not exposed. **In** various embodiments, the thin layer 343 may be around 100 nm or less. The one or more dielectric layers disclosed herein are optional in various embodiments.

In part, in one aspect, the disclosure relates to a method of fabricating an electro-optical device. The method may include providing a die that includes a second substrate, a middle layer, and an electro-optical layer, wherein the middle layer is sandwiched between the electro-optical layer and the substrate, wherein the die has a shape, wherein the shape is defined by a length, a width, and a height; and providing a photonic wafer that includes a photonic integrated circuit, wherein the wafer further includes a first substrate, a dielectric waveguide, a first dielectric layer, wherein the first dielectric layer is sandwiched between the dielectric waveguide and the first substrate, and metal electrodes embedded in the first dielectric layer, a second dielectric layer above the dielectric waveguide; etching the second dielectric layer of the wafer to define a cavity, wherein the cavity is sized to receive the die; securing the die in the cavity; and the dielectric waveguide, the electro-optical layer, and the first and second electrodes form an electro-optical hybrid waveguide.

In some embodiments, the method may include preparing the die by processing a prefabricated wafer to form the die, the electro-optical layer can be patterned or uniform across the die. In some embodiments, the method may include depositing one or more dielectric layers above the electro-optical layer on the prefabricated wafer. In some embodiments, the method may include depositing one or more dielectric layers above the dielectric waveguide on the wafer. In some embodiments, the method may include depositing dielectric material between the die and the sidewalls of the cavity. In some embodiments, the method may include partially or fully removing the second substrate of the die.

In some embodiments, securing the die in the cavity uses a flip-chip bonding. In some embodiments, the flip-chip bonding includes a direct die to wafer bond. In some embodiments, the flip-chip bonding includes using a reconstituted die to wafer bond, wherein multiple dies are placed in a template before bonding to the wafer simultaneously. In some embodiments, the electro-optical hybrid waveguide is an arm of MZI modulator. In some embodiments, the method may include embedding one or more metal layers in the second dielectric layer that are electrically connected to the first and second electrode. In some embodiments, the method may include embedding metal vias embedded in the first substrate. In some embodiments, the method may include forming a waveguide-integrated photodiode within the photonic integrated circuit. In some embodiments, the method may include coupling light between the hybrid electro-optical waveguide and other optical components of the photonic integrated circuit through the dielectric waveguide. In some embodiments, optical coupling is achieved through tapering the width of the dielectric waveguide.

Although, the disclosure relates to different aspects and embodiments, it is understood that the different aspects and embodiments disclosed herein can be integrated, combined, or used together as a combination system, or in part, as separate components, devices, and systems, as appropriate. Thus, each embodiment disclosed herein can be incorporated in each of the aspects to varying degrees as appropriate for a given implementation. Further, the various apparatus, optical elements, cards, network interfaces, counters, frames, communication modules, photonic integrated circuits, timers, layers, optical paths, waveguides, splitters, couplers, combiners, electro-optical devices, inputs, outputs, ports, channels, components and parts of the foregoing disclosed herein can be used with any laser, laser-based communication system, waveguide, fiber, transmitter, transceiver, receiver, and other devices and systems without limitation. In some embodiments, in close proximity may indicate that something is disposed on or adjacent or near another component or thing.

Having thus described several aspects and embodiments of the technology of this application, it is to be appreciated that various alterations, modifications, and improvements will readily occur to those of ordinary skill in the art. Such alterations, modifications, and improvements are intended to be within the spirit and scope of the technology described in the application. It is, therefore, to be understood that the foregoing embodiments are presented by way of example only and that, within the scope of the appended claims and equivalents thereto, inventive embodiments may be practiced otherwise than as specifically described. In addition, any combination of two or more features, systems, articles, materials, and/or methods described herein, if such features, systems, articles, materials, and/or methods are not mutually inconsistent, is included within the scope of the present disclosure.

Also, as described, some aspects may be embodied as one or more methods. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

The phrase "and/or," as used herein in the specification and in the claims, should be understood to mean "either or both" of the elements so conjoined, i.e., elements that are conjunctively present in some cases and disjunctively present in other cases.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

The terms "approximately" and "about" may be used to mean within ±20% of a target value in some embodiments, within ±10% of a target value in some embodiments, within ±5% of a target value in some embodiments, and yet within ±2% of a target value in some embodiments. The terms "approximately" and "about" may include the target value.

In the claims, as well as in the specification above, all transitional phrases such as "comprising," "including," "carrying," "having," "containing," "involving," "holding," "composed of," and the like are to be understood to be open-ended, i.e., to mean including but not limited to. The transitional phrases "consisting of" and "consisting essentially of" shall be closed or semi-closed transitional phrases, respectively.

Where a range or list of values is provided, each intervening value between the upper and lower limits of that range or list of values is individually contemplated and is encompassed within the disclosure as if each value were specifically enumerated herein. In addition, smaller ranges between and including the upper and lower limits of a given range are contemplated and encompassed within the disclosure. The listing of exemplary values or ranges is not a disclaimer of other values or ranges between and including the upper and lower limits of a given range.

The use of headings and sections in the application is not meant to limit the disclosure; each section can apply to any aspect, embodiment, or feature of the disclosure. Only those claims which use the words "means for" are intended to be interpreted under 35 USC 112, sixth paragraph. Absent a recital of "means for" in the claims, such claims should not be construed under 35 USC 112. Limitations from the specification are not intended to be read into any claims, unless such limitations are expressly included in the claims.

## Claims

1. An electro-optical device comprising
a first substrate;
a first dielectric layer above the first substrate;
a first and second electrode embedded in the first dielectric layer;
a dielectric waveguide above the first dielectric layer;
a second dielectric layer above the first dielectric layer and the dielectric waveguide, wherein the second dielectric layer defines a cavity above the dielectric waveguide; and
a die comprising:
a second substrate,
a middle layer, and
an electro-optical layer, wherein the middle layer is sandwiched between the electro-optical layer and the second substrate, wherein the die has a shape, wherein the shape is defined by a length, a width, and a height, wherein the die is disposed in the cavity,
wherein the dielectric waveguide and the electro-optical layer define a hybrid electro-optical waveguide, wherein the first electrode and the second electrode are configured to change an optical phase of the hybrid electro-optical waveguide.

2. The electro-optical device of claim 1, wherein the dielectric waveguide is silicon.

3. The electro-optical device of claim 1 or 2, wherein the electro-optical layer comprises lithium niobate.

4. The electro-optical device of any preceding claim, wherein the electro-optical layer comprises barium titanate.

5. The electro-optical device of any preceding claim, wherein the hybrid electro-optical waveguide is part of arms of a Mach-Zehnder interferometer.

6. The electro-optical device of any preceding claim, wherein there are multiple copies of hybrid electro-optical waveguides underneath the die comprising the second substrate.

7. The electro-optical device of any preceding claim, wherein the shape of the die is an approximately rectangular solid.

8. The electro-optical device of any preceding claim, wherein the length of the die ranges from about 500 um to about 3 cm, wherein the width of the die ranges from about 500 um to about 3 cm, wherein the height ranges from about 100 um to 700 um.

9. The electro-optical device any preceding claim further comprising a photonic integrated circuit, wherein the photonic integrated circuit comprises the dielectric waveguide and a portion of the electro-optical layer is in optical communication with the dielectric waveguide.

10. The electro-optical device of claim 9, wherein the dielectric waveguide and the electro-optical layer are electrically coupled, wherein the electrical coupling is controlled in response to a width of the dielectric waveguide.

11. The electro-optical device of claim 9 or 10 further comprising a waveguide-integrated photodiode, the waveguide-integrated photodiode in optical communication with the dielectric waveguide.

12. The electro-optical device of any preceding claim, wherein the electro-optical layer is patterned or is a uniform film across the die.

13. The electro-optical device of any preceding claim, wherein any one or more of:
A) the die further comprises one or more dielectric layers, wherein the one or more dielectric layers are disposed on the electro-optical layer of the die, wherein the one or more dielectric layers have a thickness less than or equal to about 100 nm;
B) one or more dielectric layers are disposed at a bottom surface of cavity above the dielectric waveguide, wherein the one or more dielectric layers have a thickness less than or equal to about 100 nm;
C) one or more additional metal layers are embedded in the first dielectric layer that are electrically connected to the first and second electrodes;
D) one or more metal layers are embedded in the second dielectric layer that are directly or indirectly electrically connected to the first and second electrodes;
E) a layer of metal vias is embedded in the first substrate and are directly or indirectly electrically connected to the first and second electrodes.

14. A method of fabricating an electro-optical device the method comprising:
providing a die comprising a second substrate, a middle layer, and an electro-optical layer, wherein the middle layer is sandwiched between the electro-optical layer and the second substrate, wherein the die has a shape, wherein the shape is defined by a length, a width, and a height; and
providing a photonic wafer comprising a photonic integrated circuit, wherein the photonic wafer further comprises a first substrate, a dielectric waveguide, and a first dielectric layer, wherein the first dielectric layer is sandwiched between the dielectric waveguide and the first substrate, and metal electrodes embedded in the first dielectric layer, a second dielectric layer above the dielectric waveguide;
etching the second dielectric layer of the photonic wafer to define a cavity, wherein the cavity is sized to receive the die; and
securing the die in the cavity,
wherein the dielectric waveguide, the electro-optical layer, and the metal electrodes form an electro-optical hybrid waveguide.

15. The method of claim 14, wherein one or both of:
A) the dielectric waveguide comprises silicon;
B) the electro-optical layer comprises lithium niobate or barium titanate.
